# EUROPEAN PATENT APPLICATION

(11) **EP 1 811 642 A2**
(43) Date of publication of application: **25.07.2007**
(21) Application number: 06124486.9
(22) Date of filing: 21.11.2006
(51) Int. Cl.: H02M 1/32

(54) **Power supply device**

(30) Priority: 23.01.2006 KR 20060006862
(71) Applicant: Samsung Electronics Co., Ltd., Suwon-si Gyeonggi-do (KR)
(72) Inventor: Lee, Sang Taek, Seoul (KR)
(74) Representative: Grünecker, Kinkeldey, Stockmair & Schwanhäusser Anwaltssozietät

(57) **Abstract**

A power supply device supplying power to various electric devices or inverters of a DC motor. The power supply device can detect an over-voltage which is applied to various electric devices or inverters of a DC motor from an external power source or an over-voltage caused by defects of power lines. The power supply device can break power, such that power supply circuits or systems can be protected against damage and malfunction thereof. The power supply device includes a rectifier rectifying power from an external AC power source, a smoothing unit, and an over-voltage protection circuit determining whether the rectified voltage includes an over-voltage, and breaking the over-voltage before the over-voltage is applied to the smoothing unit if the determination is positive.

## Description

### BACKGROUND OF THE INVENTION

### 1. Field of the Invention

The present invention relates to a power supply technology, and, more particularly, to a power supply device supplying power to various electric devices or inverters of a DC motor, which is capable of detecting an over-voltage which is applied to the electric devices or inverters, from an external power source, or an over-voltage caused by defects in power lines, and breaking power, such that power supply circuits or systems can be protected against damage and malfunction thereof.

### 2. Description of the Related Art

Generally, a power supply circuit rectifies a single phase or three phase power input from an external power source through rectifiers including a plurality of diodes, smoothes the rectified power through a capacitor to transform the power to a DC voltage, and then supplies the DC voltage to inverters or electric devices, etc.

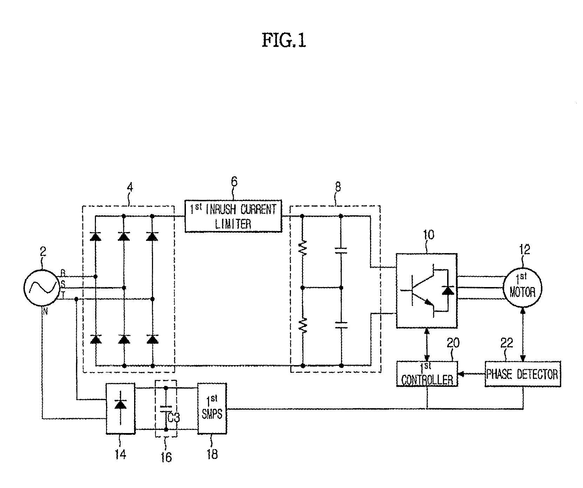

FIG. 1 is a block diagram illustrating a conventional three-phase power supply device.

As shown in FIG. 1, the three-phase power supply device includes a three-phase AC power source 2, a first rectifier 4, a first inrush current limiter 6, a first smoothing unit 8, a first inverter 10, a first motor 12, a second rectifier 14, a second smoothing unit 16, a first switching mode power supply (SMPS) 18, a first controller 20, and a phase detector 22.

The three-phase AC power source 2 supplies AC power of three phases, R-, S-, and T-phases, thereto, and to supply a single phase voltage thereto, in which the single phase voltage is generated between a T-phase power line and a neutral power line N. The first rectifier 4 converts the AC power supplied from the three-phase power source 2 to a full wave rectified voltage. The first inrush current limiter 6 limits inrush current generated when the AC power is initially applied thereto.

The first smoothing unit 8 smoothes the full wave rectified voltage rectified in the first rectifier 4 to transform the rectified voltage to a DC voltage. The first inverter 10 converts the DC voltage of the first smoothing unit 8 to an AC voltage driving the first motor 12. The first inverter 10 includes a plurality of switching elements operated by control signals of the first controller 20. The first motor 12 is driven by the three-phase power supplied from the first inverter 10. The first motor 12 is implemented with a brush less direct current (BLDC) motor, etc.

The second rectifier 14 rectifies the AC power supplied between the T-phase power line of the three-phase AC power source 2 and the neutral power line N. The second smoothing unit 16 smoothes the full wave rectified voltage from the second rectifier 14.

The first SMPS 18 transforms the DC voltage from the second smoothing unit 16 to DC voltages operating the first controller 20 and the phase detector 22 and then supplies the DC voltages thereto.

The phase detector 22 detects position and speed of a rotor of the first motor 12 and transmits this information to the first controller 20, such that the first controller 20 can control the first inverter 10 using information transmitted from the phase detector 22.

When over-voltage is applied to the second rectifier 14 as the two-phase power lines (R- and S-) are connected to one another, power is not supplied to the second rectifier 14 through the T-phase power line and the neutral power line N, and the first SMPS 18 malfunctions or breaks down. Also, when over-voltage is applied to the first rectifier 4 by such a malfunction of the three-phase AC power source 2, the circuit malfunctions or breaks down.

Therefore, an over-voltage protection circuit is used in the power supply device of FIG. 1 in order to prevent malfunctions of the system from breaking down, due to the over-voltage.

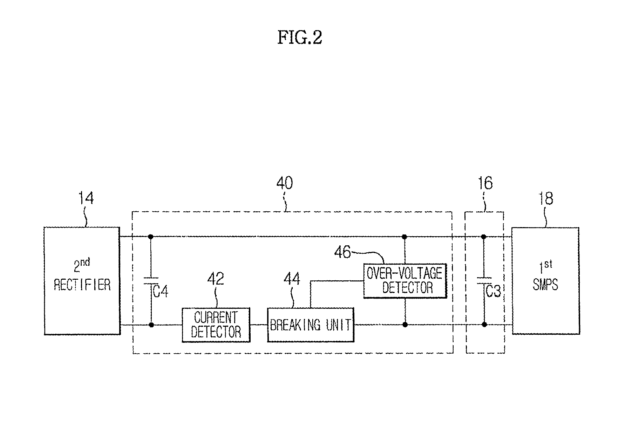

FIG. 2 is a conventional over-voltage protection circuit.

As shown in FIG. 2, the conventional over-voltage protection circuit 40, which is located between the second rectifier 14 and the second smoothing unit 16, includes a capacitor C4, a current detector 42, a breaking unit 44 and an over-voltage detector 46.

The capacitor C4absorbs an over-voltage, which is generated for a short period when AC power is initially input thereto, and the current detector 42 prevents a transient current from flowing.

The over-voltage detector 46 detects voltage between both leads of a capacitor C3 of the second smoothing unit 16 and compares the detected voltage with a predetermined voltage to control ON/OFF operations of the breaking unit 44. On the other hand, the breaking unit 44 is turned on/off according to the control of the over-voltage detector 46, such that power supply is controlled from the second rectifier 14 to the first SMPS 18.

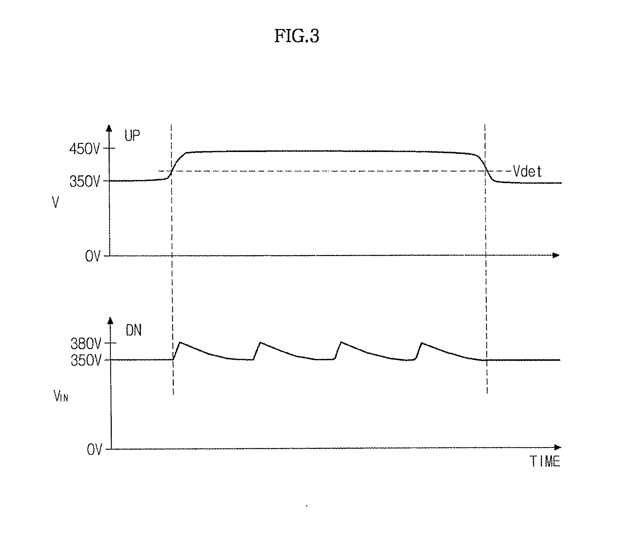

FIG. 3 illustrates waveforms according to operations of the conventional over-voltage protection circuit, in which horizontal and vertical axes denote time and voltage, respectively.

More specifically, the upper waveform of FIG. 3 illustrates a voltage input to the over-voltage protection circuit, and the lower waveform of FIG. 3 illustrates a voltage Vin output when the over-voltage protection circuit is operated as a voltage V is input thereto.

As shown in FIG. 3, since the conventional over-voltage protection circuit 40 is operated as voltage of both ends of the capacitor C3 of the second smoothing unit 16 is detected and compared with the predetermined voltage Vdet, when an over-voltage exceeding the predetermined voltage Vdet is input thereto, the over-voltage detector 46 controls the breaking unit 44 so as not to supply power thereto.

When power is cut off, charge of the capacitor C4 is discharged on the basis of a time constant such that the potential of the capacitor is decreased. Therefore, the over-voltage detector 46 controls the breaking unit 44 such that power can be re-supplied thereto. However, since over-voltage is still input thereto after the power is supplied, the over-voltage detector 46 controls the breaking unit 44 again so as not to supply power thereto. Namely, such power supply and break operations are repeatedly performed in the over-voltage detector 46 and the breaking unit 44.

Therefore, when the over-voltage is input thereto, the conventional over-voltage protection circuit does not completely break power, instead a pulsating voltage is output as shown in the lower graph of FIG. 3. When such a pulsating voltage is input to the system, the system operates unstably or malfunctions.

### SUMMARY OF THE INVENTION

Accordingly, it is an aspect of the present invention to provide a power supply device which is capable of breaking power supplying a system when over-voltage from an AC power source is applied or an over-voltage caused by a defect of power lines, etc., is applied.

Additional aspects and/or advantages of the invention will be set forth in part in the description which follows and, in part, will be apparent from the description, or may be learned by practice of the invention.

The foregoing and/or other aspects of the invention are achieved by providing a power supply device comprising: a rectifier rectifying a voltage from an external AC power source; a smoothing unit; and an over-voltage protection circuit determining whether the rectified voltage includes an over-voltage, and breaking the over-voltage before the over-voltage is applied to the smoothing unit if determined that the rectified voltage includes an over-voltage.

The over-voltage protection circuit may include: a voltage divider performing voltage division of the rectified voltage; a voltage comparator comparing the divided voltage from the voltage divider with a predetermined reference voltage and outputting signals for an over-voltage or a normal voltage, in which the predetermined reference voltage is included in the voltage comparator; a switching element which is turned on/off according to the signals output from the voltage comparator; and a voltage generator generating a driving voltage of the switching element. The over-voltage protection circuit may be located between the rectifier and the smoothing unit.

The over-voltage protection circuit determines whether the rectified voltage output from the rectifier includes an over-voltage, based on comparing the rectified voltage with a predetermined reference voltage.

The over-voltage protection circuit may perform circuit connection such that a normal voltage is supplied to the smoothing unit, if the rectified voltage is determined as the normal voltage, when the over-voltage has been broken.

The foregoing and/or other aspects may also be achieved by providing a power supply device comprising: a rectifier rectifying a voltage from an external AC power source; a smoothing unit; and an over-voltage protection circuit. Here, the over-voltage protection circuit includes: a voltage divider performing voltage division of the rectified voltage; a voltage comparator comparing the divided rectified voltage with a predetermined reference voltage and to determine an over-voltage and outputting an over-voltage signal or a normal voltage signal, in which the predetermined reference voltage is included in the voltage comparator; a switching element which is turned on/off according to the output of the voltage comparator; and a voltage generator generating a driving voltage for the switching element, wherein the over-voltage protection circuit breaks the over-voltage before the over-voltage is supplied to the smoothing unit, if determined that the divided rectified voltage includes the over-voltage.

The over-voltage protection circuit may be located between the rectifier and the smoothing unit. The voltage comparator may output the over-voltage signal if the rectified voltage is greater than the reference voltage and the normal voltage signal if the rectified voltage is less than the reference voltage. The switching element may be turned off if the voltage comparator outputs the over-voltage signal, and is turned on if the voltage comparator outputs the normal voltage signal.

The switching element is turned on if the voltage comparator outputs a normal voltage signal when the switching element has been turned off. The rectifier and the smoothing unit are electrically cut off from one another if the switching element is turned off, and connected to one another if the switching element is turned on.

The foregoing and/or other aspects may also be achieved by providing a device comprising: a three-phase four-wire power supply device comprising three phase power lines and a neutral power line; a three-phase rectifier rectifying three-phase AC power to a rectified voltage; a first smoothing unit smoothing the rectified voltage of the three-phase rectifier; a single-phase rectifier rectifying a single-phase AC power to a rectified voltage, in which the single-phase AC power is generated between one of the three phase power lines and the neutral power line; a second smoothing unit smoothing the rectified voltage of the single-phase rectifier; and first and second over-voltage protection circuits. Here, the first over-voltage protection circuit determines whether the rectified voltage of the three-phase rectifier includes an over-voltage, and breaks the over-voltage before the over-voltage is supplied to the first smoothing unit, if the rectified voltage of the three-phase rectifier includes the over-voltage. The second over-voltage protection circuit determines whether the rectified voltage of the single-phase rectifier includes an over-voltage, and breaks the over-voltage before the over-voltage is supplied to the second smoothing unit, if the rectified voltage of the single-phase rectifier includes the over-voltage.

Each of the first and second over-voltage protection circuits may include: a voltage divider performing voltage division of the respective rectified voltage; a voltage comparator comparing the divided voltage with a predetermined reference voltage and outputting signals for the over-voltage or a normal voltage, in which the predetermined reference voltage is included in the voltage comparator; a switching element which is turned on/off according to the output of the voltage comparator; and a voltage generator generating a driving voltage for the switching element.

The first over-voltage protection circuit determines whether the rectified voltage of the three-phase rectifier includes the over-voltage, based on comparing the rectified voltage of the three-phase rectifier with a first predetermined reference voltage. The second over-voltage protection circuit determines whether the rectified voltage of the single-phase rectifier includes the over-voltage, based on comparing the rectified voltage of the singe-phase rectifier with a second predetermined reference voltage.

If the rectified voltage of the three-phase rectifier is greater than the first predetermined reference voltage, the first over-voltage protection circuit determines that the rectified voltage of the three-phase rectifier includes the over-voltage, and if the rectified voltage of the three-phase rectifier is less than the first predetermined reference voltage, determines that the rectified voltage of the three-phase rectifier is the normal voltage.

If the rectified voltage of the single-phase rectifier is greater than the second predetermined reference voltage, the second over-voltage protection circuit determines that the rectified voltage of the single-phase rectifier includes the over-voltage and if the rectified voltage of the single-phase rectifier is less than the second predetermined reference voltage, determines that the rectified voltage of the single-phase rectifier is the normal voltage.

The first over-voltage protection circuit performs circuit connection such that a normal voltage is supplied to the first smoothing unit, if the rectified voltage of the three-phase rectifier is determined as the normal voltage, when the over-voltage has been broken.

The second over-voltage protection circuit performs circuit connection such that a normal voltage is supplied to the second smoothing unit, if the rectified voltage of the single-phase rectifier is not an over-voltage, when the over-voltage has been broken.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a block diagram illustrating a conventional three-phase power supply device;
FIG. 2 is a conventional over-voltage protection circuit;
FIG. 3 illustrates waveforms according to operations of the conventional over-voltage protection circuit;
FIG. 4 is a block diagram illustrating a three-phase power supply device including an over-voltage protection circuit according to an embodiment of the present invention;
FIG. 5 is a block diagram illustrating a single-phase power supply device including an over-voltage protection circuit according to another embodiment of the present invention;
FIG. 6 is a detailed illustration of the second over-voltage protection circuit of FIG. 4;
FIG. 7 is a circuit diagram of a voltage detector included in an over-voltage protection circuit of FIG. 4; and
FIG. 8 illustrates simulation waveforms when an over-voltage is applied to the over-voltage protection circuit of FIG. 4.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

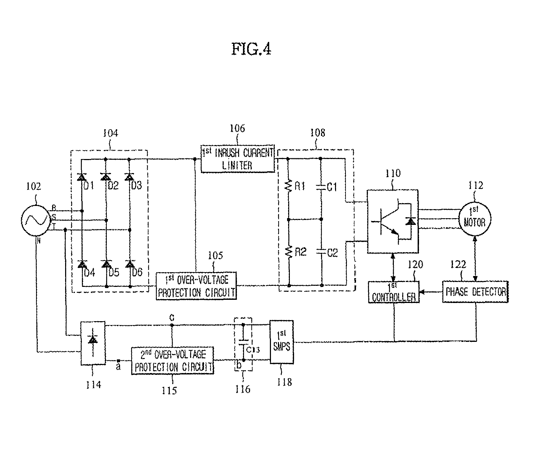

FIG. 4 is a block diagram illustrating a three-phase power supply device including an over-voltage protection circuit according to an embodiment of the present invention.

As shown in FIG. 4, the three phase power supply device according to the embodiment of the present invention includes a three-phase AC power source 102, a first rectifier 104, a first over-voltage protection circuit 105, a first inrush current limiter 106, a first smoothing unit 108, a first inverter 110, a first motor 112, a second rectifier 114, a second over-voltage protection circuit 115, a second smoothing unit 116, a first switching mode power supply (SMPS) 118, a first controller 120, and a phase detector 122.

The three-phase AC power source 102, which includes three power lines for R-, S- and T-phases, and a neutral power line N, supplies 380V thereto among the three power lines, and 220V thereto between the T-phase power line and a neutral power line N.

The first rectifier 104, which includes 6 diodes, D1 to D6, converts the AC power from the three-phase power source to 102 to a full wave rectified voltage. The first inrush current limiter 106 may be implemented with a relay and an inrush current limitation resistor, etc. to limit inrush current generated when the AC power is initially applied thereto.

The first over-voltage protection circuit 105, which is located between the first rectifier 104 and the first smoothing unit 108, inputs a voltage output from the first rectifier 104 and compares the output voltage with a predetermined reference voltage, such that power supply can be controlled on the basis of the comparison result so as not to apply an over-voltage to a system connected thereto.

The first smoothing unit 108, which includes two capacitors C1 and C2, and resistors R1 and R2 which are connected, in parallel, to the two capacitors C1 and C2 smooth the full wave rectified voltage rectified in the first rectifier 104 to transform the rectified voltage to a DC voltage. Here, the resistors R1 and R2 function as a voltage divider, such that the respective capacitors C1 and C2 can be biased by an equal voltage to compensate for characteristics of the capacitors C1 and C2.

The first inverter 110 converts the DC voltage of the first smoothing unit 108 to an AC voltage to drive the first motor 112. The first inverter 110 includes a plurality of switching elements operated by control signals of the first controller 120. The first motor 112 is driven by the three-phase power, such that the three-phase power is supplied to the first motor 112 as the switching elements of the first inverter 110 are turned on/off. The first motor 112 is implemented with a brush-less direct current (BLDC) motor, etc.

The second rectifier 114, which includes four diodes, serves to rectify the AC power supplied between the T-phase power line of the three-phase AC power source 102 and the neutral power line N.

The second over-voltage protection circuit 115, which is located between the second rectifier 114 and the second smoothing unit 116, receives a voltage output from the second rectifier 114 and compares the output voltage with a predetermined reference voltage, such that power supply to the first SMPS 118 can be controlled on the basis of the comparison result so as not to apply an over-voltage to the first SMPS 18.

The second smoothing unit 116, which is implemented with a capacitor C13, smoothes the full wave rectified voltage from the second rectifier 114. The first SMPS 118 transforms the DC voltage from the second smoothing unit 116 to DC voltages operating the first controller 120 and the phase detector 122 and then supplies the DC voltages thereto.

The first controller 120 and the phase detector 122 receive the power from the first SMPS 118. The phase detector 122 detects position and speed of a rotor of the first motor 112 and transmits this information to the first controller 120, such that the first controller 120 can control the switching elements of the first inverter 110 using information transmitted from the phase detector 122, thereby driving the first motor 112.

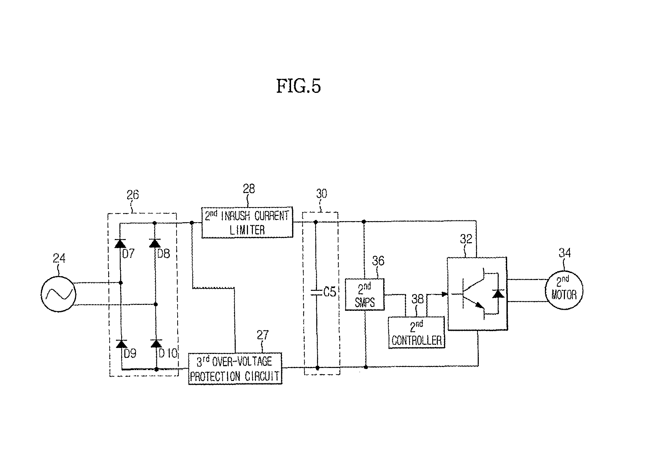

FIG. 5 is a block diagram illustrating a single-phase power supply device including an over-voltage protection circuit according to another embodiment of the present invention.

As show in FIG. 5, the single-phase power supply device includes a single phase AC power source 24, a third rectifier 26, a third over-voltage protection circuit 27, a second inrush current limiter 28, a third smoothing unit 30, a second inverter 32, a second motor 34, a second SMPS 36, and a second controller 38.

The single phase AC power source 24 supplies a single phase AC power thereto. The third rectifier 26, which is implemented with four diodes D7 to D10, converts the single phase AC power from the single phase AC power source 24 to a full wave rectified voltage.

The third over-voltage protection circuit 27, which is located between the third rectifier 26 and the third smoothing unit 30, receives a voltage output from the third rectifier 26 and compares the output voltage with a predetermined reference voltage, such that power supply to the second SMPS 36 can be controlled on the basis of the comparison result so as not to apply an over-voltage to the second SMPS 36.

The second inrush current limiter 28 limits inrush current generated when the AC power is initially applied thereto. The third smoothing unit 30, which is implemented with a capacitor C5, o smoothes the full wave rectified voltage rectified in the third rectifier 26 to convert the smoothed voltage to a DC voltage. The second inverter 32 converts the DC voltage from the third smoothing unit 30 to an AC voltage operating the second motor 34. The second inverter 32 includes switching elements operated by control signals of the second controller 38.

The second SMPS 36 transforms the DC voltage from the third smoothing unit 30 to DC voltages operating the second controller 38 and then supplies the DC voltages thereto. The second controller 38 inputs the DC voltages from the second SMPS 36 and then controls the second inverter 32, which drives the second motor 34.

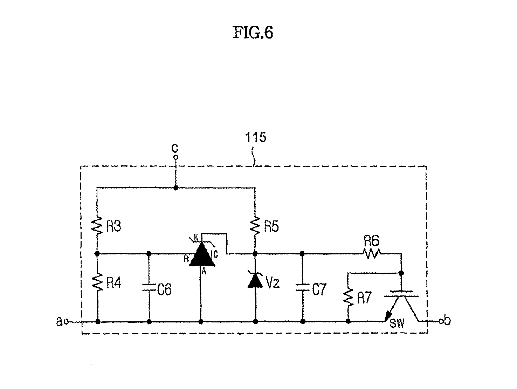

FIG. 6 is a detailed illustration of the second over-voltage protection circuit 115 of FIG. 4 in detail.

As shown in FIG. 6, the over-voltage protection circuit 115 includes resistors R3 and R4, which are connected to one another in series between both ends a and c of the second rectifier 114, and a capacitor C6 which is connected to both ends of the resistor R4 in parallel. Also, the over-voltage protection circuit 115 includes a resistor R5, one end of which is connected to the end c of the second rectifier, and a voltage detector IC whose cathode lead K is connected to another end of the resistor R5, whose reference lead R is connected to the node which is commonly connected to ends of R3, R4, and C6, and whose anode lead A is connected to the end a of the second rectifier.

In addition, the over-voltage protection circuit includes a Zener diode Vz whose one end is connected to a node between the cathode K of the voltage detector IC and the resistor R5, and whose other end is connected to the anode lead A of the voltage detector IC, a capacitor C7 which is connected to the Zener diode in parallel Vz, a resistor R6 whose one end is connected to the end of the capacitor C7, a switching transistor SW whose gate is connected to another end of the resistor R6, whose collector is connected to one end b of the second smoothing unit 116, and whose emitter is connected to the end a of the second rectifier, and a resistor R7 whose both ends are connected to the gate and the emitter of the switching transistor SW, respectively.

The resistors R3 and R4 function as a voltage divider, which divides the voltage output from the second rectifier 114 into a proper voltage to be input to the voltage detector IC. The capacitor C6 removes noise included in the voltage to be input to the voltage detector IC.

The voltage detector IC compares the input voltage with a predetermined reference voltage, and then outputs the comparison result, such that the switching transistor SW can be turned on/off.

The resistor R5 and the Zener diode Vz generate a voltage driving the switching transistor SW using a voltage applied to the over-voltage protection circuit 115. The capacitor C7 removes noises in the over-voltage protection circuit 115.

The resistor R6 is used for current limitation, and the resistor R7 stabilizes a voltage supplied to the gate of the switching transistor SW.

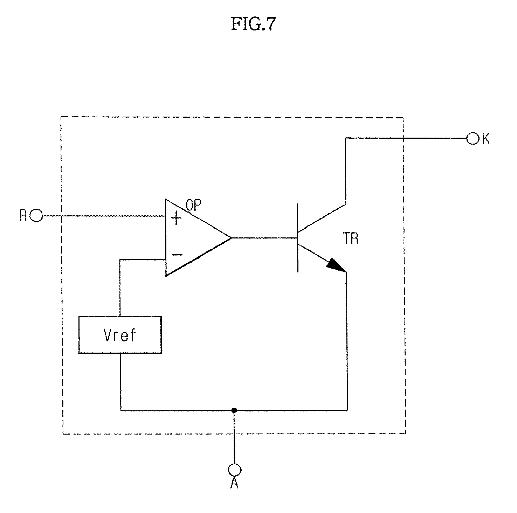

FIG. 7 is a circuit of a voltage detector IC included in the over-voltage protection circuit 115 of FIG.4, which is implemented with a single IC chip.

As shown in FIG. 7, the voltage detector IC includes a reference voltage generator generating a reference voltage Vref, a comparator OP and a transistor TR. The comparator OP compares a voltage input through a reference lead R thereof with the reference voltage Vref, in which the input voltage is previously generated through voltage division. When the input voltage is greater than the reference voltage Vref, the comparator OP outputs a high level signal such that the transistor TR can be turned on. On the other hand, if the input voltage is less than the reference voltage Vref, the comparator OP outputs a low level signal such that the transistor TR can be turned off.

With reference to FIG. 6 and FIG. 7, operations of the over-voltage protection circuit 115 according to the embodiment of the present invention are described in detail below.

First, when the full wave rectified voltage of the second rectifier 114 is divided by the resistors R3 and R4 and then applied to the reference lead R of the voltage detector IC, the comparator OP of the voltage detector IC compare the input voltage with the reference voltage Vref.

When the input voltage is greater than the reference voltage Vref, the comparator OP outputs a high level signal such that the transistor TR can be turned on. When the transistor TR is turned on, since the voltage between the cathode lead K and the anode lead A of the voltage detector IC is close to zero, the switching transistor SW is turned off. In that case, the leads a and b of the over-voltage protection circuit 115 are electrically broken from one another. Therefore, the power is not transmitted from the second rectifier 114 to the second smoothing unit.

On the other hand, when the input voltage is less than the reference voltage Vref, the comparator OP outputs a low level signal such that the transistor TR can be turned off. In that case, the driving voltage, which is generated by the resistor R5 and the Zener diode Vz of the over-voltage protection circuit 115, is applied to the gate of the switching transistor SW, such that the switching transistor SW can be turned on. Therefore, the power is transmitted from the second rectifier 114 to the second smoothing unit 116.

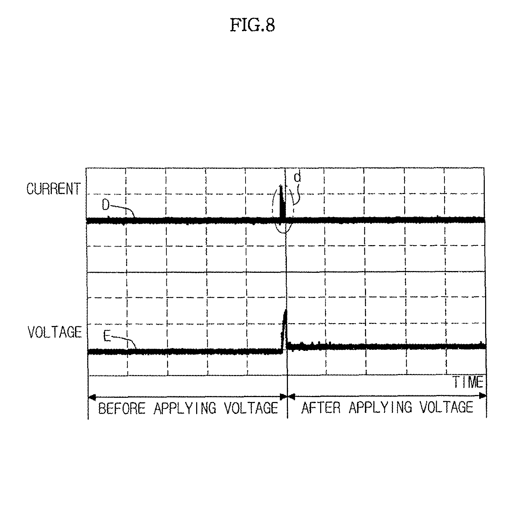

FIG. 8 illustrates simulation waveforms in a case that an over-voltage is applied to the over-voltage protection circuit 115.

More specifically, waveform D denotes current flowing between the leads a and b of the over-voltage protection circuit 115, in which the current does not flow therebetween before a voltage is applied thereto and after an over-voltage is applied thereto, except for a short period d where a current briefly flows when a voltage is applied thereto. Here, such a period d is a period from a time point when the switching transistor SW is turned on as a voltage is applied thereto to a time point when the switching transistor is turned off again as an over-voltage is detected.

Waveform E denotes a voltage between the gate and the emitter of the switching transistor, in which the voltage is maintained below the threshold voltage when an over-voltage has been detected.

As shown in FIG. 8, the over-voltage protection circuit 115 detects the over-voltage and maintains the voltage between the gate and the emitter of the switching transistor SW below the threshold voltage, thereby turning off the switching transistor SW. Therefore, the over-voltage cannot be applied to the SMPS 118.

Although the second over-voltage protection circuit 115 of FIG. 6 is illustrated in detail to describe the over-voltage protection circuit of FIG. 4, the structure and function thereof are the same as the first and third over-voltage protection circuits 105 and 27, only except that values of the respective elements in the respective protection circuits are different from each other according to magnitudes of voltages applied to the protection circuits.

As mentioned above, the power supply device according to the embodiment of the present invention can compare a voltage from the external power source with the predetermined reference voltage to detect over-voltages, and break the power supplied to the system when the over-voltages are applied to the system, thereby protecting the system against the over-voltages.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A power supply device comprising:
a rectifier rectifying a voltage from an external AC power source;
a smoothing unit; and
an over-voltage protection circuit determining whether the rectified voltage includes an over-voltage, and breaking the over-voltage before the over-voltage is applied to the smoothing unit if determined that the rectified voltage includes an over-voltage.

2. The power supply device as set forth in claim 1, wherein the over-voltage protection circuit comprises:
a voltage divider performing voltage division of the rectified voltage;
a voltage comparator comparing the divided voltage from the voltage divider with a predetermined reference voltage and outputting signals for an over-voltage or a normal voltage, in which the predetermined reference voltage is included in the voltage comparator;
a switching element which is turned on/off according to the signals output from the voltage comparator; and
a voltage generator generating a driving voltage for the switching element.

3. The power supply device as set forth in claim 1, wherein the over-voltage protection circuit is located between the rectifier and the smoothing unit.

4. The power supply device as set forth in claim 1, wherein the over-voltage protection circuit determines whether the rectified voltage includes an over-voltage, based on comparing the rectified voltage with a predetermined reference voltage.

5. The power supply device as set forth in claim 1, wherein the over-voltage protection circuit performs circuit connection such that a normal voltage is supplied to the smoothing unit, if the rectified voltage is determined as the normal voltage, when the over-voltage has been broken.

6. A power supply device comprising:
a rectifier rectifying a voltage from an external AC power source;
a smoothing unit;
an over-voltage protection circuit including:
a voltage divider performing voltage division of the rectified voltage,
a voltage comparator comparing the divided rectified voltage with a predetermined reference voltage to determine an over-voltage and outputting an over-voltage signal or a normal voltage signal, in which the predetermined reference voltage is included in the voltage comparator,
a switching element which is turned on/off according to the output of the voltage comparator, and
a voltage generator generating a driving voltage for the switching element,
wherein the over-voltage protection circuit breaks the over-voltage before the over-voltage is supplied to the smoothing unit, if determined that the divided rectified voltage includes the over-voltage.

7. The power supply device as set forth in claim 6, wherein the over-voltage protection circuit is located between the rectifier and the smoothing unit.

8. The power supply device as set forth in claim 6, wherein the voltage comparator outputs the over-voltage signal if the rectified voltage is greater than the reference voltage and outputs the normal voltage signal if the divided rectified voltage is less than the reference voltage.

9. The power supply device as set forth in claim 6, wherein the switching element is turned off if the voltage comparator outputs the over-voltage signal, and is turned on if the voltage comparator outputs the normal voltage signal.

10. The power supply device as set forth in claim 9, wherein if the voltage comparator outputs the normal voltage signal when the switching element has been turned off, the switching element is turned on.

11. The power supply device as set forth in claim 6, wherein the rectifier and the smoothing unit are electrically cut off from one another if the switching element is turned off, and connected to one another if the switching element is turned on.

12. A device comprising:
a three-phase four-wire power supply device comprising three phase power lines and a neutral power line;
a three-phase rectifier rectifying three-phase AC power to a rectified voltage;
a first smoothing unit smoothing the rectified voltage of the three-phase rectifier;
a single-phase rectifier rectifying a single-phase AC power to a rectified voltage, in which the single-phase AC power is generated between one of the three phase power lines and the neutral power line;
a second smoothing unit smoothing the rectified voltage of the single-phase rectifier;
a first over-voltage protection circuit determining whether the rectified voltage of the three-phase rectifier includes an over-voltage, and breaking the over-voltage before the over-voltage is supplied to the first smoothing unit, if the rectified voltage of the three-phase rectifier includes the over-voltage; and
a second over-voltage protection circuit determining whether the rectified voltage of the single-phase rectifier includes an over-voltage, and breaking the over-voltage before the over-voltage is supplied to the second smoothing unit, if the rectified voltage of the single-phase rectifier includes the over-voltage.

13. The device as set forth in claim 12, wherein each of the first and second over-voltage protection circuits comprises:
a voltage divider performing voltage division of the respective rectified voltage;
a voltage comparator comparing the divided voltage with a predetermined reference voltage and outputting signals for the over-voltage or a normal voltage, in which the predetermined reference voltage is included in the voltage comparator;
a switching element which is turned on/off according to the output of the voltage comparator; and
a voltage generator generating a driving voltage for the switching element.

14. The device as set forth in claim 12, wherein the first over-voltage protection circuit determines whether the rectified voltage of the three-phase rectifier includes the over-voltage, based on comparing the rectified voltage of the three-phase rectifier with a first predetermined reference voltage, and the second over-voltage protection circuit determines whether the rectified voltage of the single-phase rectifier includes the over-voltage, based on comparing the rectified voltage of the singe-phase rectifier with a second predetermined reference voltage.

15. The device as set forth in claim 14, wherein if the rectified voltage of the three-phase rectifier is greater than the first predetermined reference voltage, the first over-voltage protection circuit determines that the rectified voltage of the three-phase rectifier includes the over-voltage, if the rectified voltage output from the three-phase rectifier is greater than the first predetermined reference voltage, and if the rectified voltage of the three-phase rectifier is less than the first predetermined reference voltage, determines that the rectified voltage of the three-phase rectifier is the normal voltage, if the rectified voltage output from the three-phase rectifier is less than the first predetermined reference voltage.

16. The device as set forth in claim 14, wherein if the rectified voltage of the single-phase rectifier is greater than the second predetermined reference voltage, the second over-voltage protection circuit determines that the rectified voltage of the single-phase rectifier includes the over-voltage, if the rectified voltage output from the single-phase rectifier is greater than the second predetermined reference voltage, and if the rectifier voltage of the single-phase rectifier is less than the second predetermined reference voltage, determines that the rectified voltage of the single-phase rectifier is the normal voltage.

17. The device as set forth in claim 12, wherein the first over-voltage protection circuit performs circuit connection such that a normal voltage is supplied to the first smoothing unit, if the rectified voltage of the three-phase rectifier is determined as the normal voltage, when the over-voltage has been broken.

18. The device as set forth in claim 12, wherein the second over-voltage protection circuit performs circuit connection such that a normal voltage is supplied to the second smoothing unit, if the rectified voltage of the single-phase rectifier is not an over-voltage, when the over-voltage has been broken.

19. A method comprising:
rectifying a voltage from an external AC power source;
determining whether the rectified voltage includes an over-voltage; and
breaking the over-voltage before the over-voltage is applied to a smoothing unit if determined that the rectified voltage includes the over-voltage.

20. The method as set forth in claim 19, wherein the breaking comprises completely breaking the over-voltage.
